# EUROPEAN PATENT APPLICATION

(11) **EP 4 840 765 A2**
(43) Date of publication of application: **18.11.2026**
(21) Application number: 26209993.0
(22) Date of filing: 25.02.2025
(51) Int. Cl.: B64F 5/50

(54) **APPARATUS FOR SUPPORTING AT LEAST A PART OF AN ENGINE**

(30) Priority: 20.03.2024 GB 202403993
(62) Document number(s) of the earlier application(s) in accordance with Art. 76 EPC: 25159836.3 / 4 620 833
(71) Applicant: Rolls-Royce plc, London N1 9FX (GB)
(72) Inventor: Wingfield, Michael J, Derby, DE24 8BJ (GB)
(74) Representative: Rolls-Royce plc

(57) **Abstract**

Apparatus for supporting at least a part of an engine, the apparatus comprising: an engine stand configured to support at least a part of an engine; an engine cover defining an aperture; a dehumidifier coupled to the aperture of the engine cover, the dehumidifier being configured to remove water vapour from air within the engine cover.

## Description

### CROSS REFERENCE TO RELATED APPLICATIONS

This represents the first application directed towards the subject-matter.

### FIELD

This disclosure relates to apparatus for supporting at least a part of an engine.

### BACKGROUND

An engine, such as a gas turbine engine, may be supported by an engine stand. For example, when a gas turbine engine is removed from an aircraft, the gas turbine engine may be mounted on, and attached to an engine stand to enable the gas turbine engine to be transported to a maintenance facility for servicing. The engine may experience various different conditions during transportation and when in storage. For example, where an engine cover is opened outside during wet conditions, water may enter the inside of the engine cover and rest on the engine, causing deterioration of the engine.

### SUMMARY

According to an example there is provided apparatus for supporting at least a part of an engine, the apparatus comprising: an engine stand configured to support at least a part of an engine; an engine cover defining an aperture; a dehumidifier coupled to the aperture of the engine cover, the dehumidifier being configured to remove water vapour from air within the engine cover.

The apparatus may further comprise a controller configured to control the operation of the dehumidifier.

The apparatus may further comprise a humidity sensor configured to measure humidity within the engine cover and to generate humidity data.

The controller may be configured to receive the humidity data and to activate the dehumidifier in response to the measured humidity being greater than a predetermined threshold.

The controller may be configured to receive the humidity data and to deactivate the dehumidifier in response to the measured humidity being less than a predetermined threshold.

The apparatus may further comprise a global navigation satellite system (GNSS) sensor coupled to the engine stand. The global navigation satellite system sensor may be configured to determine a location of the engine stand. The controller may be configured to receive the determined location from the global navigation satellite system sensor and to control emptying of a water tank of the dehumidifier in response to determining that the engine stand is located outside of a building.

The controller may be configured to control emptying of the water tank by controlling pumping of water from the water tank through one or more ducts to release water across an exterior surface of the engine cover.

The apparatus may further comprise: a pipe coupled between an inlet of the dehumidifier and the aperture of the engine cover.

The apparatus may further comprise valve apparatus positioned within the aperture of the engine cover. The valve apparatus may comprise a first check valve configured to allow air to flow from within the engine cover to an inlet of the dehumidifier. The valve apparatus may comprise a second check valve configured to allow air to flow from an outlet of the dehumidifier to within the engine cover.

The apparatus may further comprise a pipe including a first conduit and a second conduit. The first conduit may be coupled between the first check valve and the inlet of the dehumidifier. The second conduit may be coupled between the second check valve and the outlet of the dehumidifier.

The dehumidifier may comprise a funnel positioned within the aperture of the engine cover. The dehumidifier may be configured to decrease the temperature of the funnel to cause the water vapour to condense on the funnel.

The dehumidifier may be coupled to the engine stand.

The apparatus may further comprise an electrical energy storage device coupled to the engine stand and configured to supply electricity to the dehumidifier.

The apparatus may further comprise inductive charging circuitry coupled to the engine stand and configured to supply electricity to the electrical energy storage device.

According to another example there is provided apparatus for supporting at least a part of an engine, the apparatus comprising: an engine stand configured to support at least a part of an engine; an engine cover arranged to cover at least the part of the engine; an electrical dehumidifier positioned within the engine cover and configured to remove water vapour from air within the engine cover.

### BRIEF DESCRIPTION OF THE DRAWINGS

Embodiments will now be described by way of example only with reference to the accompanying drawings, which are purely schematic and not to scale, and in which:
FIG. 1 illustrates a schematic diagram of an apparatus for supporting at least a part of an engine according to an example;
FIG.2 illustrates a schematic diagram of another apparatus for supporting at least a part of an engine according to an example;
FIG. 3 illustrates a side view of a further apparatus for supporting at least a part of an engine according to an example;
FIG. 4 illustrates a front view of a valve apparatus according to an example;
FIG. 5 illustrates a perspective view of a pipe according to an example;
FIG. 6 illustrates a cross sectional side view of the valve apparatus illustrated in FIG. 4 and the pipe illustrated in FIG. 5;
FIG. 7 illustrates a side view of another apparatus for supporting at least a part of an engine according to an example;
FIG. 8 illustrates a schematic diagram of a further apparatus for supporting at least a part of an engine according to an example;
FIG. 9 illustrates a flow diagram of a method according to an example; and
FIG. 10 illustrates a flow diagram of another method according to an example.

### DETAILED DESCRIPTION

In the following description, the terms 'connected' and 'coupled' mean operationally connected and coupled. It should be appreciated that there may be any number of intervening components between the mentioned features, including no intervening components.

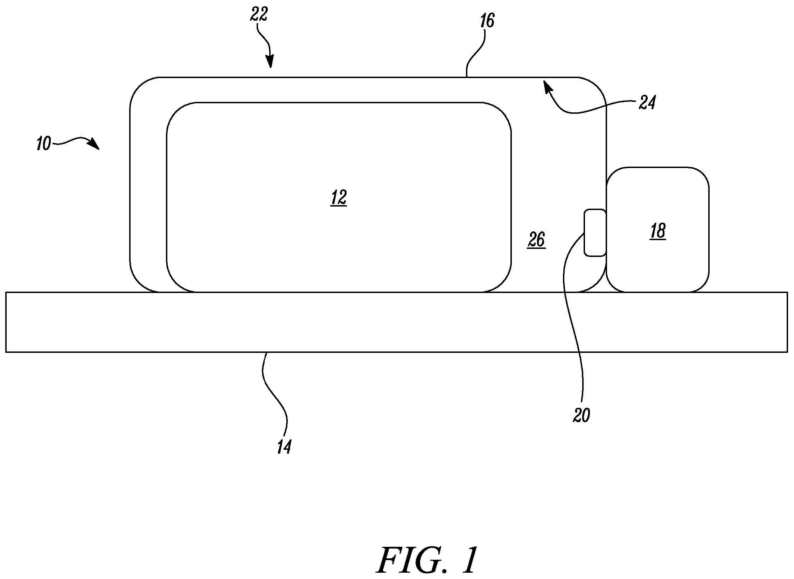

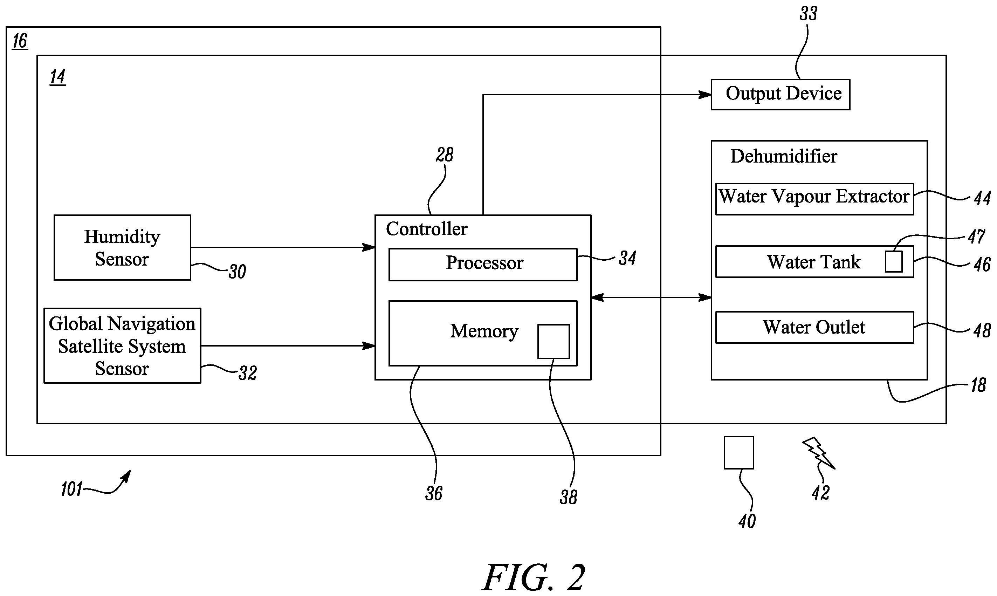

FIG. 1 illustrates a schematic diagram of an apparatus 10 for supporting at least a part of an engine 12. The apparatus 10 includes an engine stand 14, an engine cover 16 and a dehumidifier 18. In some examples, the apparatus 10 may be a module. As used herein, the word 'module' refers to a device or apparatus where one or more components are included at a later time and, possibly, by another manufacturer or by an end user. For example, where the apparatus 10 is a module, the apparatus 10 may only include the engine stand 14, the engine cover 16 and the dehumidifier 18 and other features (such as a controller as illustrated in FIG. 2) may be added by another manufacturer, or by an end user.

The engine 12 may be a heat engine such as a gas turbine engine, a reciprocating engine (which may also be known as a piston engine), a rocket engine or a nuclear reactor. Alternatively, the engine 12 may be an electrical motor, a pneumatic motor or a hydraulic motor. A part of the engine 12 may be one or more components or sub-systems of an engine 12. For example, a part of a gas turbine engine may be a fan module that includes a fan case and a fan, but excludes an engine core of the gas turbine engine (that is, the fan module does not include combustion equipment and a turbine). By way of another example, a part of a gas turbine engine may be an engine core of a gas turbine engine that includes combustion equipment, and a turbine, but excludes the fan module (that is, the engine core does not include a fan case and a fan).

The engine stand 14 is configured to support at least a part of the engine 12. For example, the engine 12 (or part of the engine) may rest on the engine stand 14 and be held in a stationary position relative to the engine stand 14 through frictional contact with the engine stand and one or more clamping devices. Additionally, or alternatively, the engine 12 (or part of the engine) may be held in a stationary position relative to the engine stand 14 by one or more fasteners that couple the engine 12 to the engine stand 14. For example, one or more screws may extend through the engine stand 14 and into the engine 12 and thereby attach the engine 12 to the engine stand 14.

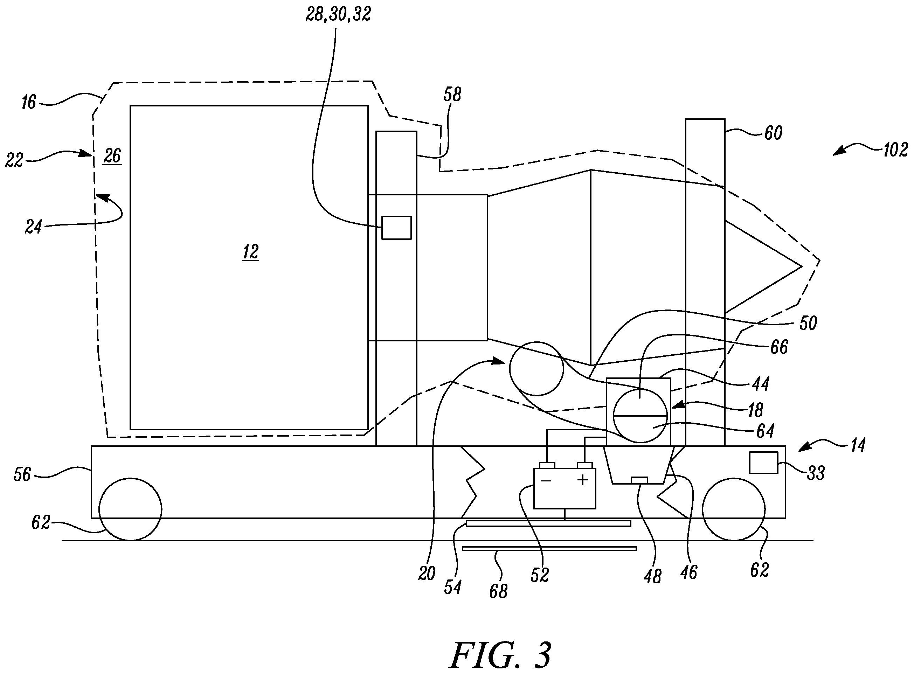

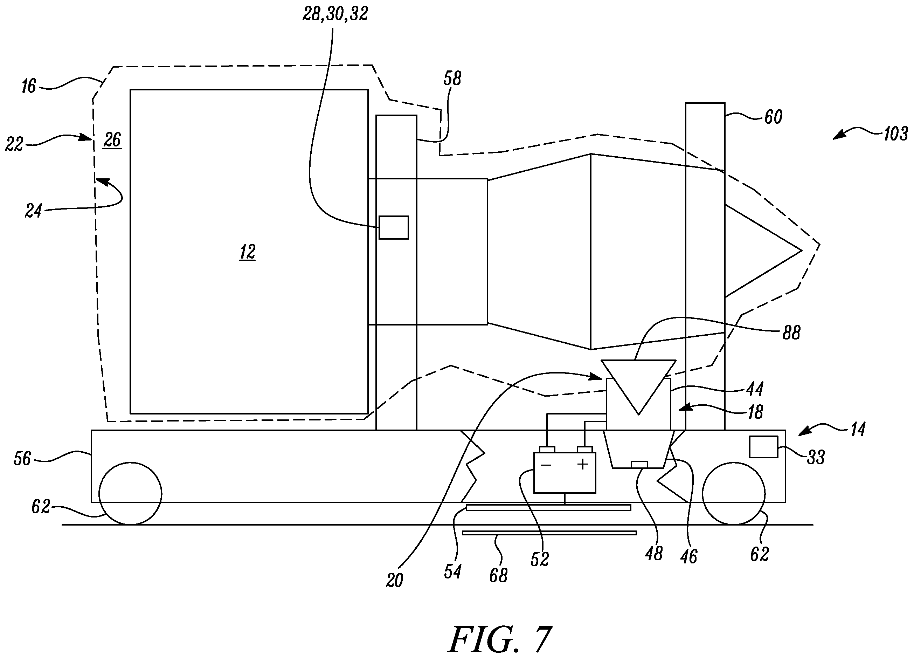

The engine cover 16 is configured to enclose the engine 12 at least partially and may comprise a water-resistant material, or a waterproof material. For example, the engine cover 16 may comprise a water-resistant fabric sheet that is shaped and dimensioned to wrap around the engine 12 and thereby enclose the engine 12. The engine cover 16 defines an aperture 20 that is arranged to couple to the dehumidifier 18. For example, the aperture 20 may be positioned in the engine cover 16, dimensioned and shaped to receive an inlet of the dehumidifier 18, or to a receive a pipe to connect to the dehumidifier 18 (as illustrated in FIGS. 3, 4, 5 and 6), or to receive a funnel of the dehumidifier 18 (as illustrated in FIG. 7). When the engine cover 16 at least partially encloses the engine 12, the engine cover 16 defines an exterior surface 22, an interior surface 24 and an interior volume 26.

The dehumidifier 18 is coupled to the aperture 20 of the engine cover 16 and is configured to remove water vapour from air within the engine cover 16. The dehumidifier 18 may be positioned outside of the engine cover 16 (that is, the dehumidifier 18 is not positioned within the interior volume 26 of the engine cover 16), or may be positioned partially inside the engine cover 16 (for example, where the dehumidifier 18 includes a funnel that extends into the interior volume as illustrated in FIG. 7). The dehumidifier 18 may be coupled to the engine stand 18 (for example, via one or more fasteners such as screws, or nuts and bolts), or may be positioned on the ground adjacent to the engine stand 14.

The dehumidifier 18 may be any suitable type of dehumidifier. For example, the dehumidifier 18 may be a condensate dehumidifier that uses a refrigeration cycle to remove water vapour from air within the interior volume 26 of the engine cover 16. By way of another example, the dehumidifier 18 may be a desiccant dehumidifier that uses a hydrophilic material (such as silica gel) to remove water vapour from air within the interior volume 26 of the engine cover 16. By way of a further example, the dehumidifier 18 may be a Peltier dehumidifier that uses a thermoelectric device to remove water vapour from air within the interior volume 26 of the engine cover 16.

In use, the engine 12 may be supported by the engine stand 14, enclosed within the engine cover 16, and may be transported between different locations (for example, between an aircraft and a maintenance facility). During such use, the engine stand 14 may be subject to various atmospheric conditions (rain, fog, sunshine and snow for example). When the engine cover 16 is opened during wet, humid or snowy conditions, water may enter the interior volume 26 of the engine cover 16 and rest on the engine 12 and the interior surface 24.

The apparatus 10 may be advantageous in that the removal of water vapour from within the engine cover 16 by the dehumidifier 18 may prevent deterioration of the engine 12 caused by condensation of water vapour on the engine 12. Additionally, the apparatus 10 may advantageously increase the rate of evaporation of water in contact with the engine 12 and with the interior surface 24 by decreasing the relative humidity within the interior volume 26 of the engine cover 16.

It should be appreciated that the apparatus 10 may be advantageous even in the absence of an engine 12 in the interior volume 26 of the engine cover 16. In particular, the dehumidifier 18 may be used to dehumidify and remove water from an engine cover 16 prior to the engine 12 being mounted on the engine stand 14 and being covered by the engine cover 16. The apparatus 10 may thus prevent water from being introduced to the engine 12 from an already wet engine cover 16.

FIG. 2 illustrates a schematic diagram of another apparatus 101 according to an example. The apparatus 101 is similar to the apparatus 10 and where the features are similar, the same reference numerals are used. The apparatus 101 includes an engine stand 14, an engine cover 16, a controller 28, a humidity sensor 30, a global navigation satellite system sensor 32, an output device 33, and a dehumidifier 18. The apparatus 10 may comprise one or more of the additional features illustrated in FIG. 2. For example, the apparatus 10 may additionally include one or more of: the controller 28, the humidity sensor 30, the global navigation satellite system sensor 32, and the output device 33.

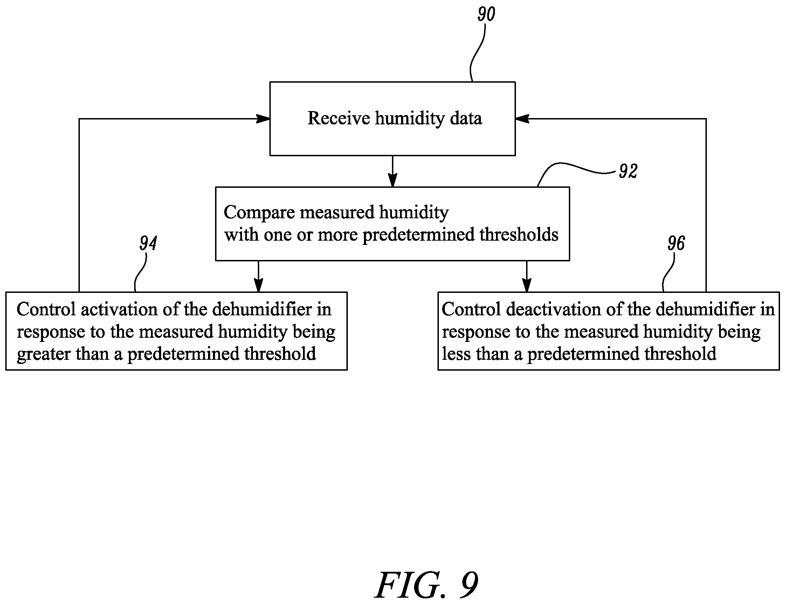

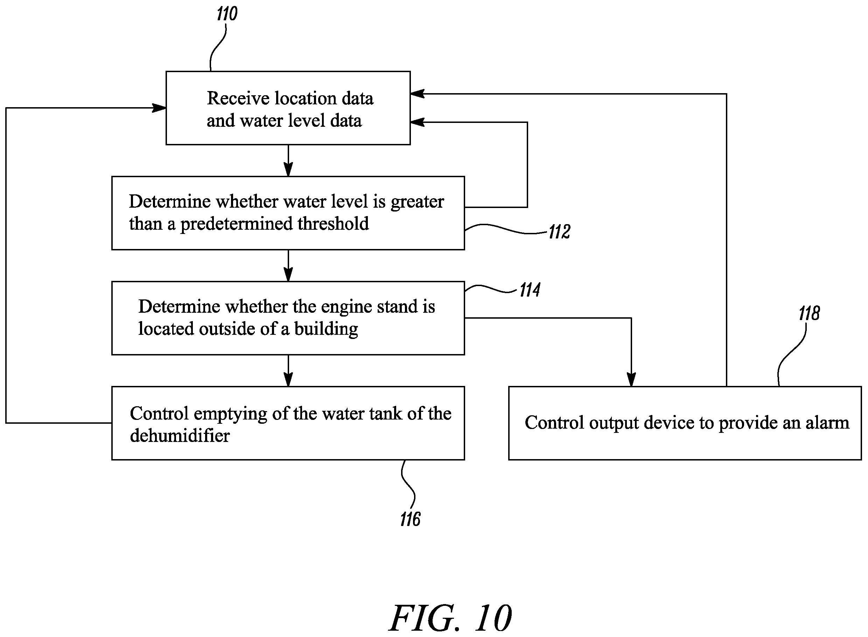

The controller 28 may be integrated with the dehumidifier 18, may be integrated with the humidity sensor 30, or may be a standalone unit (either coupled to the engine stand 28 or provided in the 'cloud'). The controller 28 is coupled to the engine stand 14 and may comprise any suitable circuitry to cause performance of the methods described herein and as illustrated in FIGS. 9 and 10. The controller 28 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU); and/or a neural processing unit (NPU), to perform the methods.

In various examples, the controller 28 may comprise at least one processor 34 and at least one memory 36. The memory 36 stores a computer program 38 comprising computer readable instructions that, when read by the processor 34, causes performance of the methods described herein, and as illustrated in FIGS. 9 and 10. The computer program 38 may be software or firmware, or may be a combination of software and firmware.

The processor 34 may include at least one microprocessor and may comprise a single core processor, may comprise multiple processor cores (such as a quad core processor or an octo core processor), or may comprise a plurality of processors (at least one of which may comprise multiple processor cores).

The memory 36 may be any suitable non-transitory computer readable storage medium, data storage device or devices, and may comprise a hard disk and/or solid-state memory (such as flash memory). The memory 36 may be permanent non-removable memory, or may be removable memory (such as a universal serial bus (USB) flash drive or a secure digital (SD) card). The memory 36 may include: local memory employed during actual execution of the computer program 38; bulk storage; and cache memories which provide temporary storage of at least some computer readable or computer usable program code to reduce the number of times code may be retrieved from bulk storage during execution of the code.

The computer program 38 may be stored on a non-transitory computer readable storage medium 40. The computer program 38 may be transferred from the non-transitory computer readable storage medium 40 to the memory 36. The non-transitory computer readable storage medium 40 may be, for example, a USB flash drive, a secure digital (SD) card, an optical disc (such as a compact disc (CD), a digital versatile disc (DVD) or a Blu-ray disc). In some examples, the computer program 38 may be transferred to the memory 36 via a signal 42 (such as a wireless signal or a wired signal).

Input/output devices may be coupled to the controller 28 either directly or through intervening input/output controllers. Various communication adaptors may also be coupled to the controller 28 to enable the apparatus 101 to become coupled to other apparatus or remote printers or storage devices through intervening private or public networks. Nonlimiting examples include modems and network adaptors of such communication adaptors.

The humidity sensor 30 is configured to measure humidity within the engine cover 16 and to generate humidity data. For example, the humidity sensor 30 may comprise any suitable hygrometer and may comprise a capacitive hygrometer, a resistive hygrometer, or an optical hygrometer. The controller 28 is configured to receive the humidity data from the humidity sensor 30 and may control the storage of the humidity data in the memory 36. The humidity sensor 30 may be coupled to the engine stand 14, or may be coupled to the interior surface 24 of the engine cover 16.

The global navigation satellite system (GNSS) sensor 32 may comprise any suitable sensors that are configured to determine a location (longitude and latitude for example) of the global navigation satellite system (GNSS) sensor 32 on the Earth and generate location data. For example, the global navigation satellite system (GNSS) sensor 32 may be a Global Positioning System (GPS) sensor or a Galileo sensor. The controller 28 is configured to receive the location data from the global navigation satellite system (GNSS) sensor 32 and may control storage of the location data in the memory 36. Additionally, the controller 28 may compare the determined location of the global navigation satellite system (GNSS) sensor 32 with a map of at least part of the Earth to determine whether the apparatus is positioned within a building, or outside of a building.

The output device 33 is configured to provide an alarm to a person and may be integrated with the dehumidifier 18, or may be a standalone unit. For example, the output device 33 may comprise a loudspeaker that may output an audible alarm to a person. By way of another example, the output device 33 may additionally or alternatively comprise a display that may output a visual alarm to a person. The controller 28 is configured to control the operation of the output device 33 to provide an alarm to a person, and this is explained in greater detail below with reference to FIG. 10.

The dehumidifier 18 includes a water vapour extractor 44, a water tank 46 and a water outlet 48. The controller 28 is configured to control the operation of the dehumidifier 18. In particular, the controller 28 is configured to activate the dehumidifier 18 (for example, turn on the dehumidifier 18) and to deactivate the dehumidifier 18 (for example, turn off the dehumidifier 18).

The water vapour extractor 44 may include a refrigerator, a thermoelectric device, or a desiccant. In some examples, the water vapour extractor 44 may comprise a pump that is configured to move air from the interior volume 26 of the engine cover 16 to the water vapour extractor 44 of the dehumidifier 18. The controller 28 is configured to control the operation of the water vapour extractor 44. For example, where the water vapour extractor 44 includes a refrigerator, the controller 28 may control a compressor to compress a refrigerant and control rotation of a fan to circulate air across an evaporator. By way of another example, where the water vapour extractor 44 includes a thermoelectric device, the controller 28 may control the provision of electrical power to the thermoelectric device to cause a temperature gradient across the thermoelectric device. By way of a further example, where the water vapour extractor 44 includes a desiccant, the controller 28 may control rotation of a desiccant wheel, rotation of a fan and the provision of electrical power to a heater.

The water tank 46 is arranged to receive and store condensed water from the water vapour extractor 44. In some examples, the water tank 46 may comprise a water level sensor 47 that is configured to detect the level of water in the water tank 46 and to generate water level data. The controller 28 is configured to receive the water level data from the water level sensor 47.

The water outlet 48 is arranged to enable the egress of water from the water tank 46. In some examples, the water outlet 48 includes a valve positioned in the bottom of the water tank 46 and the controller 28 is configured to control the valve to open and close to enable the water tank 46 to be emptied. For example, the controller 28 may control the valve to open for a predetermined period of time in response to determining that the water level in the water tank 46 has exceeded a threshold, and/or in response to determining that the engine stand 14 is positioned outside of a building. In other examples, the water outlet 48 includes a pump and one or more ducts that have inlets at the water tank 46 and outlets on the exterior surface 22 of the engine cover 16. The controller 28 may control the pump of the water outlet 48 to pump water from the water tank 46 through the one or more ducts to the exterior surface 22 of the engine cover 16 (for example, in response to determining that the water level in the water tank 46 has exceeded a threshold, and/or in response to determining that the engine stand 14 is positioned outside of a building).

FIG. 3 illustrates a side view of a further apparatus 102 and a gas turbine engine 12 according to an example. The apparatus 102 is similar to the apparatus 10, 101 and where the features are similar, the same reference numerals are used. The apparatus 102 includes an engine stand 14, an engine cover 16, a dehumidifier 18, a controller 28, a humidity sensor 30, a global navigation satellite system (GNSS) sensor 32, an output device 33, a pipe 50, an electrical energy storage device 52 and inductive charging circuitry 54.

The engine stand 14 comprises: a base frame 56, a first engine support frame 58, and a second engine support frame 60. The base frame 56 is arranged to sit on the floor and may comprise wheels and/or castors 62 that enable the engine stand 14 to be positioned on the floor (for example, by being pushed or pulled). The first engine support frame 58 is arranged to support an intermediate section of a core casing of the gas turbine engine 12 and may also be referred to as an engine cradle or inter-case support pylon. The second engine support frame 60 is arranged to support a turbine section of the core casing of the gas turbine engine 12 and may also be referred to as a turbine support pylon. A shock absorber may be provided between the base frame 56, the first engine support frame 58, and the second engine support frame 60 and may comprise one or more of: springs, pneumatic shock absorbers, and hydraulic shock absorbers. The shock absorber is configured to provide shock attenuation in the event that the engine 12 and/or the engine stand 14 are subject to a force.

The engine cover 16 is dimensioned and shaped to enclose the gas turbine engine 12. The aperture 20 is positioned in the engine cover 16 so that when the engine cover 16 encloses the gas turbine engine 12, the aperture 20 is located above the bottom of the engine cover 16 to prevent the aperture 20 from being immersed in water. For example, the aperture 20 may be positioned in the engine cover 16 so that the aperture 20 is located one third, one quarter, or half-way up the cover engine 16 when the engine cover 16 encloses the gas turbine engine 12.

The dehumidifier 18 includes a water vapour extractor 44, a water tank 46 and a water outlet 48. The dehumidifier 18 is coupled to the engine stand 14 and is positioned outside of the engine cover 16 (that is, the dehumidifier 18 is positioned outside of the interior volume 26 of the engine cover 16). In particular, the water vapour extractor 44 is positioned on top of, and coupled to the base frame 56 of the engine stand 14 adjacent to the second engine support frame 60. The water tank 46 and the water outlet 48 are positioned within the base frame 56 and are coupled to the water vapour extractor 44.

The water vapour extractor 44 includes an air inlet 64 and an air outlet 66. In some examples, the pipe 50 is coupled between the aperture 20 of the engine cover 16 and the air inlet 64 and the air outlet 66 (as illustrated in FIGS. 3, 4, 5 and 6). In other examples, the pipe 50 may be coupled between the aperture 20 and the air inlet 64, and the air outlet 66 may be open to the atmosphere or may be coupled to a second aperture in the engine cover 16 via a second pipe. The pipe 50 may comprise a fan that is configured to move air from the interior volume 26 of the engine cover 16 to the water vapour extractor 44 of the dehumidifier 18.

The electrical energy storage device 52 is coupled to the engine stand 14 (for example, the base frame 56 as illustrated in Fig. 3) and is configured to supply electrical energy to at least the dehumidifier 18. The electrical energy storage device 52 may comprise one or more electrochemical cells and/or one or more supercapacitors. In some examples, the electrical energy storage device 52 may also be configured to supply electrical energy to one or more of: the controller 28, the humidity sensor 30, the global navigation satellite system sensor 32 and the output device 33. In other examples, the apparatus 101 may comprise one or more further electrical energy storage devices for supplying electrical energy to the controller 28, the humidity sensor 30, the global navigation satellite system sensor 32 and the output device 33.

The inductive charging circuitry 54 is coupled to the engine stand 14 (for example, on the underside of the base frame 56) and is configured to supply electricity to the electrical energy storage device 52. When the engine stand 14 is positioned over inductive charging circuitry 68 on the ground, the inductive charging circuitry 68 may induct an electrical current in the inductive charging circuitry 54 to charge the electrical energy storage device 52.

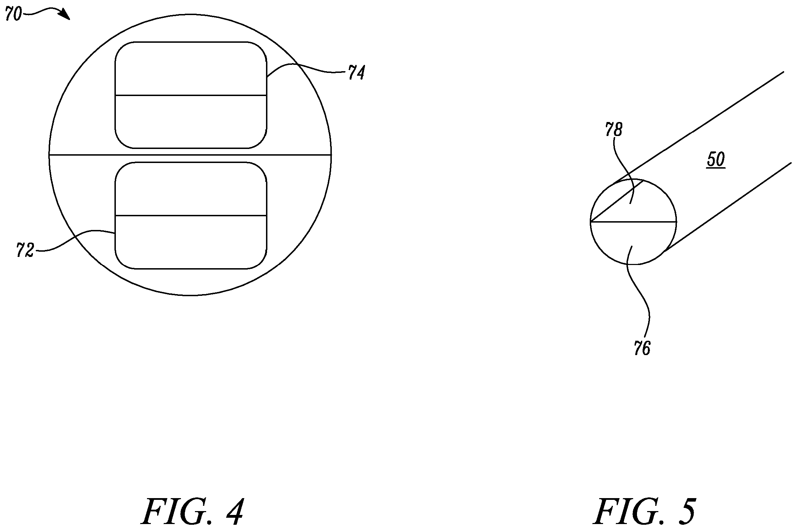

FIG. 4 illustrates a front view of a valve apparatus 70 that is configured to fit within the aperture 20 of the engine cover 16. The valve apparatus 70 includes a first check valve 72 that is configured to allow air to flow from within the engine cover 16 to the air inlet 64 of the dehumidifier 18. The valve apparatus 70 also includes a second check valve 74 that is configured to allow air to flow from the air outlet 66 of the dehumidifier 18 to within the engine cover 16.

FIG. 5 illustrates a perspective view of a pipe 50 that may be coupled between the valve apparatus 70 illustrated in FIG. 4, and the air inlet 64 and the air outlet 66 of the dehumidifier 18. The pipe 50 includes a first conduit 76 and a second conduit 78. The first conduit 76 may be coupled between the first check valve 72 and the air inlet 64 of the dehumidifier 18. The second conduit 78 may be coupled between the second check valve 74 and the air outlet 66 of the dehumidifier 18.

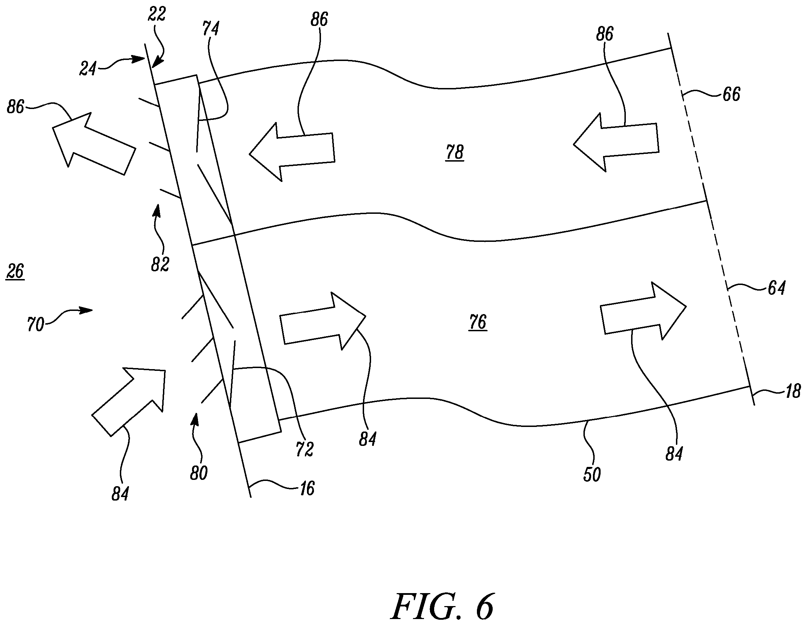

FIG. 6 illustrates a cross sectional side view of the valve apparatus 70 illustrated in FIG. 4 and the pipe 50 illustrated in FIG. 5. The valve apparatus 70 also includes inlet vanes 80 and outlet vanes 82 that are positioned at the first check valve 72 and the second check valve 74 respectively. The inlet vanes 80 are oriented to draw air 84 from the bottom of the interior volume 26 of the engine cover 16. The air 84 then moves through the first check valve 72 and through the first conduit 76 to the air inlet 64 of the dehumidifier 18. The outlet vanes 82 are arranged to receive air 86 from the second conduit 78 and the second check valve 74 and are oriented to direct the air 86 toward the top of the interior volume 26 of the engine cover 16. It should be appreciated that in some examples, the valve apparatus 70 may include the inlet vanes 80, but may not include the outlet vanes 82. In other examples, the valve apparatus 70 may include the outlet vanes 82, but may not include the inlet vanes 80. In still further examples, the valve apparatus 70 may not include inlet vanes 80 or outlet vanes 82.

The apparatus 102 may advantageously be relatively quick and simple to operate. For example, the dehumidifier 18 and may be coupled to the aperture 20 of the engine cover 16 via a single pipe (that is, the pipe 50). Additionally, the electrical energy storage device 52 may be relatively easy to charge by positioning the inductive charging circuitry 54 of the engine stand 14 over the inductive charging circuitry 68 in the ground. The apparatus 102 may also be advantageous in that the inlet vanes 80 and/or the outlet vanes 82 of the valve apparatus 70 may increase the circulation of air within the interior volume 26 of the engine cover 16 and this may increase the rate of water vapour extraction by the dehumidifier 18.

FIG. 7 illustrates a side view of another apparatus 103 and a gas turbine engine 12 according to an example. The apparatus 103 is similar to the apparatus 10, 101, 102 and where the features are similar, the same reference numerals are used.

The apparatus 103 differs from the apparatus 102 in that the water vapour extractor 44 includes a funnel 88 that is positioned within the aperture 20 and extends into the interior volume 26 of the engine cover 16. The dehumidifier 18 is configured to decrease the temperature of the funnel 88 to cause water vapour in the interior volume 26 to condense on the funnel 88. For example, where the dehumidifier 18 is a Peltier dehumidifier, the funnel 88 may be a part of, the whole of, or connected to the cold surface of the thermoelectric device. The temperature of the funnel 88 may be reduced by the application of a voltage across the thermoelectric device. By way of another example, where the dehumidifier 18 is a condensate dehumidifier, the funnel 88 may be a part of, or connected to the evaporator of the water vapour extractor 44. The temperature of the funnel 88 may be reduced by the provision of electrical power to the refrigerator of the water vapour extractor 44 and the activation of the refrigerator compressor and evaporator fan.

In some examples, the funnel 88 may include a spring-loaded gravity valve that is arranged to stay sealed until a critical mass of liquid water forces the spring-loaded gravity valve to release the stored water into the water tank 46.

The apparatus 103 may be advantageous in that the operation of the dehumidifier 18 may be less likely to be interrupted due to an accident when compared to the apparatus 102. In particular, the funnel 88 is positioned within the engine cover 16 and is therefore less likely to be dislodged than the pipe 50 of the apparatus 102 by a person or object passing by the engine stand 14. Additionally, the apparatus 103 may require less electrical power to operate than the apparatus 102 because the funnel 88 is positioned within the engine cover 18 and may not require any fans to move air from the interior volume 26 to the water vapour extractor 44.

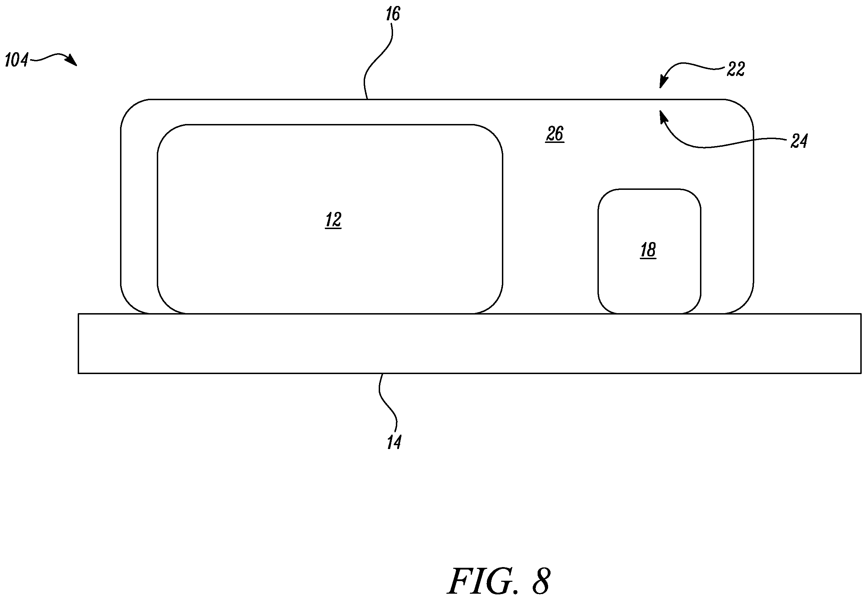

FIG. 8 illustrates a schematic diagram of a further apparatus 104 and an engine 12 according to an example. The apparatus 104 is similar to the apparatus 10, 101, 102, 103 and where the features are similar, the same reference numerals are used.

The apparatus 104 differs from the apparatus 10, 101, 102, 103 in that the dehumidifier 18 is coupled to the engine stand 14 at a location so that it is positioned within the engine cover 16 (that is, the dehumidifier 18 is positioned within the interior volume 26). Consequently, an aperture 20 may not be defined in the engine cover 16 since the apparatus 104 does not require the movement of air from within the engine cover 16 to outside of the engine cover 16 in order to extract water vapour from the interior volume 26.

The dehumidifier 18 of the apparatus 104 is an electrical dehumidifier and consumes electrical energy to extract water vapour from the air in the interior volume 26. For example, the electrical dehumidifier 18 may consume electrical energy to compress a refrigerant and control rotation of a fan to circulate air across an evaporator. By way of another example, the electrical dehumidifier 18 may consume electrical energy to cause a temperature gradient across the thermoelectric device. By way of a further example, the electrical dehumidifier 18 may consume electrical energy to rotate a desiccant wheel, rotate a fan and increase the temperature of a heater.

The apparatus 104 may be advantageous in that (similar to the apparatus 103) the operation of the dehumidifier 18 may be less likely to be interrupted due to an accident when compared to the apparatus 102. In particular, the whole of the dehumidifier 18 is positioned within the engine cover 16 and is therefore less likely to be dislodged or made inoperable by a passing person or object than the pipe 50 of the apparatus 102.

FIG. 9 illustrates a flow diagram of a method of controlling the dehumidifier 18. It should be appreciated that the method illustrated in FIG.9 may be performed by any of the apparatus 10, 101, 102, 103 and 104.

At block 90, the method includes receiving humidity data. For example, the humidity sensor 30 may measure humidity within the engine cover 16 and thereby generate humidity data. The controller 28 may receive the humidity data generated by the humidity sensor 30.

At block 92, the method includes comparing the measured humidity with one or more predetermined thresholds. For example, the controller 28 may compare the measured humidity in the received humidity data with a single predetermined threshold (forty percent for example). If the measured humidity is greater than the predetermined threshold, the method moves to block 94, and if the measured humidity is less than the predetermined threshold, the method moves to block 96.

By way of another example, the controller 28 may compare the measured humidity in the received humidity data with one of two predetermined thresholds, depending on the activation state of the dehumidifier 18. For example, where the dehumidifier 18 is inactive (for example, turned off and not removing water vapour), the controller 28 may compare the measured humidity with a first predetermined threshold, and where the dehumidifier 18 is active (turned on and removing water vapour for example), the controller 28 may compare the measured humidity with a second predetermined threshold. The second predetermined threshold may be less than the first predetermined threshold. For example, the second predetermined threshold may be forty percent and the first predetermined threshold may be fifty percent.

At block 94, the method includes controlling activation of the dehumidifier 18 in response to the measured humidity being greater than a predetermined threshold. For example, the controller 28 may control a supply of electrical power to the dehumidifier 18 in response to the measured humidity being greater than a predetermined threshold. The method may then return to block 90 and be repeated.

At block 96, the method includes controlling deactivation of the dehumidifier 18 in response to the measured humidity being less than a predetermined threshold. For example, the controller 28 may disconnect a supply of electrical power to the dehumidifier 18 in response to the measured humidity being less than a predetermined threshold. The method may then return to block 90 and be repeated.

The method illustrated in FIG. 9 may advantageously reduce the electrical energy consumption of the apparatus 10, 101, 102, 103, 104 because the dehumidifier 18 may only be activated when required (that is, when the humidity in the interior volume 26 exceeds a predetermined threshold). This may enable the dehumidifier 18 to be operable over a longer period of time and require less maintenance by operators (for example, to charge the electrical energy storage device 52).

FIG. 10 illustrates a flow diagram of a method of operating the apparatus 10, 101, 102, 103, 104.

At block 110, the method includes receiving location data and water level data. For example, the controller 28 may receive location data from the global navigation satellite system sensor 32, and may receive water level data from the water level sensor 47.

At block 112, the method includes determining whether the measured water level exceeds a predetermined threshold. For example, the controller 28 may compare the measured water level in the received water level data with a predetermined threshold. Where the measured water level is greater than the predetermined threshold, the method moves to block 114. Where the measured water level is less than the predetermined threshold, the method returns to block 110.

At block 114, the method includes determining whether the engine stand 14 is located outside of a building. For example, the controller 28 may compare the location in the received location data with a map stored in the memory 36 to determine whether the engine stand 14 is located outside of a building. Where the engine stand 14 is determined to be located outside of a building, the method moves to block 116. Where the engine stand 14 is determined to be located inside of a building, the method moves to block 118.

At block 116, the method includes controlling emptying of the water tank 46 of the dehumidifier 18. For example, the controller 28 may control a valve of the water outlet 48 to open for a predetermined period of time. By way of another example, the controller 28 may control a pump of the water outlet 48 to pump water from the water tank 46 through the one or more ducts to the exterior surface 22 of the engine cover 16 for a predetermined period of time. The method may then return to block 110.

At block 118, the method includes controlling the output device 33 to provide an alarm. For example, the controller 28 may control a loudspeaker of the output device 33 to provide an audible alarm. Additionally, or alternatively, the controller 28 may control a display of the output device 33 to present a visual alarm. A person may notice the alarm and then manually empty the water tank 46 of the dehumidifier 18.

The method illustrated FIG. 10 may advantageously increase automation of the operation of the apparatus 10, 101, 102, 103, 104 because the water tank 46 may be automatically emptied by the controller 28 when the engine stand 14 is outside of a building, or may be manually emptied when the engine stand 14 is positioned inside of a building and the water tank 46 is full.

In some examples, the method illustrated in FIG.10 may not include block 112 and consequently, the water tank 46 may be emptied whenever it is positioned outside of a building (whether it is full or not). In other examples, the method illustrated in FIG. 10 may not include block 114 and consequently, the water tank 46 may be emptied whenever it is full (whether it is outside a building or not).

Various examples have been described, each of which comprise various combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. Apparatus for supporting at least a part of an engine, the apparatus comprising:
an engine stand configured to support at least a part of an engine;
an engine cover defining an aperture;
a dehumidifier coupled to the aperture of the engine cover, the dehumidifier being configured to remove water vapour from air within the engine cover;
a controller configured to control the operation of the dehumidifier; and
a global navigation satellite system (GNSS) sensor coupled to the engine stand, the global navigation satellite system sensor being configured to determine a location of the engine stand, the controller being configured to receive the determined location from the global navigation satellite system sensor and to control emptying of a water tank of the dehumidifier in response to determining that the engine stand is located outside of a building.

2. The apparatus as claimed in claim 1, further comprising a humidity sensor configured to measure humidity within the engine cover and to generate humidity data.

3. The apparatus as claimed in claim 2, wherein the controller is configured to receive the humidity data and to activate the dehumidifier in response to the measured humidity being greater than a predetermined threshold.

4. The apparatus as claimed in claim 2 or 3, wherein the controller is configured to receive the humidity data and to deactivate the dehumidifier in response to the measured humidity being less than a predetermined threshold.

5. The apparatus as claimed in any of the preceding claims, wherein the controller is configured to control emptying of the water tank by controlling pumping of water from the water tank through one or more ducts to release water across an exterior surface of the engine cover.

6. The apparatus as claimed in any of the preceding claims, further comprising: a pipe coupled between an inlet of the dehumidifier and the aperture of the engine cover.

7. The apparatus as claimed in any of claims 1 to 5, further comprising valve apparatus positioned within the aperture of the engine cover, the valve apparatus comprising a first check valve configured to allow air to flow from within the engine cover to an inlet of the dehumidifier, and a second check valve configured to allow air to flow from an outlet of the dehumidifier to within the engine cover.

8. The apparatus as claimed in claim 7, further comprising a pipe including a first conduit and a second conduit, the first conduit being coupled between the first check valve and the inlet of the dehumidifier, and the second conduit being coupled between the second check valve and the outlet of the dehumidifier.

9. The apparatus as claimed in any of claims 1 to 5, wherein the dehumidifier comprises a funnel positioned within the aperture of the engine cover, the dehumidifier being configured to decrease the temperature of the funnel to cause the water vapour to condense on the funnel.

10. The apparatus as claimed in any of the preceding claims, wherein the dehumidifier is coupled to the engine stand.

11. The apparatus as claimed in claim 10, further comprising an electrical energy storage device coupled to the engine stand and configured to supply electricity to the dehumidifier.

12. The apparatus as claimed in claim 11, further comprising inductive charging circuitry coupled to the engine stand and configured to supply electricity to the electrical energy storage device.
